# EUROPÄISCHE PATENTSCHRIFT

(11) **EP 2 831 459 B1**
(45) Veröffentlichungstag und Bekanntmachung des Hinweises auf die Patenterteilung: **23.09.2020**
(21) Anmeldenummer: 13711878.2
(22) Anmeldetag: 21.03.2013
(51) Int. Cl.: F16D 65/18, F16D 65/56, F16D 127/06

(54) **NACHSTELLVORRICHTUNG FÜR EINE SCHEIBENBREMSE**
ADJUSTMENT DEVICE FOR A DISC BRAKE
DISPOSITIF DE RATTRAPAGE DE JEU POUR FREIN À DISQUE

(30) Priorität: 26.03.2012 DE 102012102583
(43) Veröffentlichungstag der Anmeldung: 04.02.2015
(73) Patentinhaber: KNORR-BREMSE Systeme für Nutzfahrzeuge GmbH, 80809 München (DE)
(72) Erfinder: KLINGNER, Matthias, 82272 Moorenweis (DE); CAMILO-MARTINEZ, Jose, 82008 Unterhaching (DE); MILLER, Bernhard, 71263 Weil der Stadt (DE); TRIMPE, Robert, 82234 Weißling (DE); SEIDENSCHWANG, Matthias, 81249 München (DE); STAAHL, Christian, 81929 München (DE)
(86) Internationale Anmeldenummer: PCT/EP2013/055871
(87) Internationale Veröffentlichungsnummer: WO 2013/143954

(56) Entgegenhaltungen:
- EP-A1- 0 614 025
- WO-A1-91/19115
- US-A1- 2005 269 171

## Beschreibung

Die Erfindung betrifft eine Nachstellvorrichtung für Scheibenbremsen, insbesondere für pneumatisch betätigte Scheibenbremsen.

Pneumatisch betätigte Scheibenbremse weisen in der Regel einen als Schiebesattel, Schwenksattel oder Festsattel ausgebildeten Bremssattel auf, in welchem eine Zuspannvorrichtung angeordnet ist, welche dazu dient, Bremsbeläge beidseits einer Bremsscheibe und die Bremsscheibe miteinander in Wirkverbindung zu bringen, um durch Reibung eine Bremswirkung zu erzielen.

Derartige Scheibenbremsen weisen im unbetätigten Zustand zwischen Bremsbelag und Scheibe ein Lüftspiel auf. Infolge von Belag- und Scheibenverschleiß wird dieses Lüftspiel mit der Zeit größer. Wenn diese Lüftspielzunahme nicht kompensiert wird, kann die Bremse nicht ihre Spitzenleistung erreichen, da der Hub der Betätigungsmechanik nicht mehr ausreicht, um eine genügende Bremswirkung zu erzielen.

Bekannte pneumatisch betätigte Bremsen besitzen daher in der Regel eine automatische Nachstellvorrichtung, um den Belag- und Scheibenverschleiß auszugleichen.

Nach einem bekannten Stand der Technik - siehe beispielsweise die WO 91/19115 - wirkt die Nachstellvorrichtung drehend entweder auf die Mutter (die in dieser Schrift als Traverse ausgebildet ist) oder die Spindel einer Mutter-/Spindelanordnung, um durch eine Relativverschraubung zwischen Mutter und Spindel die Länge der Mutter-/Spindelanordnung zu verändern, wodurch die Gesamtlänge der Zuspannvorrichtung zwischen dem Bremsbelag und dem Widerlager der Zuspannvorrichtung am Inneren des Bremssattels vergrößert wird, wodurch wiederum der zunehmende Belagverschleiß ausgeglichen wird.

Die automatische Nachstellvorrichtung wird mittelbar oder unmittelbar von einem Spreiz- oder Betätigungsmechanismus angetrieben. So ist es aus dem genannten Stand der Technik bekannt, den Drehhebel der Zuspannvorrichtung über einen Antriebsstift mit einem Getriebeelement der Nachstellvorrichtung zu koppeln, so dass beim Zuspannen der Bremse, bei dem der Drehhebel verschwenkt wird, auch das Getriebeelement der Nachstellvorrichtung bewegt, insbesondere gedreht wird. Diese Drehung wird über weitere Getriebeelemente der Nachstellvorrichtung auf ein Abtriebsgetriebeelement übertragen, welches drehfest mit der Mutter oder der Spindel der Mutter-/Spindelanordnung gekoppelt ist.

Damit die automatische Nachstellung nicht ein zu kleines Lüftspiel einstellt, wird im Antrieb ein Spalt vorgehalten. Durch diese Maßnahme wird die Nachstellvorrichtung erst nach der Überbrückung des sog. konstruktiven Lüftspiels angetrieben.

Der Antrieb des Nachstellers wird i.d.R. zudem von einer Überlastkupplung, in dem Moment, in welchem das Lüftspiel überwunden wurde, unterbrochen. Der nachgestellte Weg ist somit linear vom Überhub abhängig.

Gegen ein Rückdrehen beim Rückhub schützt in der Regel eine Einwegdrehkupplung wie eine Schlingfeder.

Aus der EP 0 614 025 A ist es ferner bekannt, in einem elastischen Element eines Getriebes einer Nachstellvorrichtung im Krafthub durch Verformung Energie zu speichern, die beim Lösen in Form einer zweiten Nachstellbewegung wieder abgegeben wird.

Dokument US 2005/0269171 A1 offenbart eine Nachstellvorrichtung gemäß dem Oberbegriff des Anspruchs 1.

Vor diesem Hintergrund ist es die Aufgabe der Erfindung, eine optimierte und weiterentwickelte Nachstellvorrichtung zu schaffen Die Erfindung löst diese Aufgabe durch den Gegenstand des Anspruchs 1. Vorteilhafte Ausgestaltungen der Erfindung sind in den Unteransprüchen angegeben.

Nach dem Anspruch 1 1 ist eine - vorzugsweise in eine Inkrementwechselposition - bewegliche Verrieglungseinrichtung zur Verhinderung von Drehungen von einem der oder sämtlicher der Getriebeelemente zwischen dem elastischen Element und der Abtriebseinrichtung unterhalb eines Mindestdrehwinkels vorgesehen.

Vorzugsweise ist die Verriegelungsvorrichtung dazu ausgelegt, bei einem Überschreiten eines vorgegebenen Mindestdrehwinkels in die Inkrementwechselposition bewegt zu werden, um eine inkrementelle Nachstelldrehung des oder der Getriebeelemente zwischen dem elastischen Element und dem Abtriebselement zuzulassen.

Erfindungsgemäß wird eine Nachstellvorrichtung geschaffen, bei welcher der nachgestellte Weg unabhängig vom vorhandenen Lüftspiel ist. Lediglich die Tatsache, ob nachgestellt wird oder nicht, ist vom vorhandenen Lüftspiel abhängig. Der Nachsteller stellt ab einer bestimmten Nachstellschwelle (Überhub) dabei jeweils ein gewisses Inkrement nach, welches konstruktiv vorgebbar ist.

Ein besonderer Vorteil dieses "inkrementellen" Nachstellers besteht darin, dass die erfindungsgemäße Nachstellvorrichtung unempfindlicher in Hinsicht auf äußere Störgrößen ist.

Insbesondere ist daher vorgesehen, dass zunächst eine Nachstellschwelle überwunden werden muss, bevor nachgestellt werden kann. Somit müsste eine Störung größer sein als diese Nachstellschwelle, bis eine fälschliche Nachstellung erfolgt. Durch eine geeignete Wahl der Nachstellschwelle bzw. eine entsprechende konstruktive Ausgestaltung des Inkrementes können daher Fehleinstellungen vermieden werden.

Nachfolgend wird die Erfindung anhand eines bevorzugten Ausführungsbeispiels unter Bezug auf die Zeichnung näher beschreiben. Es zeigt:
Fig. 1 eine perspektivische Ansicht einer erfindungsgemäßen Nachstellvorrichtung;
Fig. 2 eine Schnittansicht der Nachstellvorrichtung aus Fig. 1; und
Fig. 3 ein Diagramm, welches das Nachtstellverhalten einer erfindungsgemäßen Nachstellvorrichtung im Vergleich zum Stand der Technik veranschaulicht.

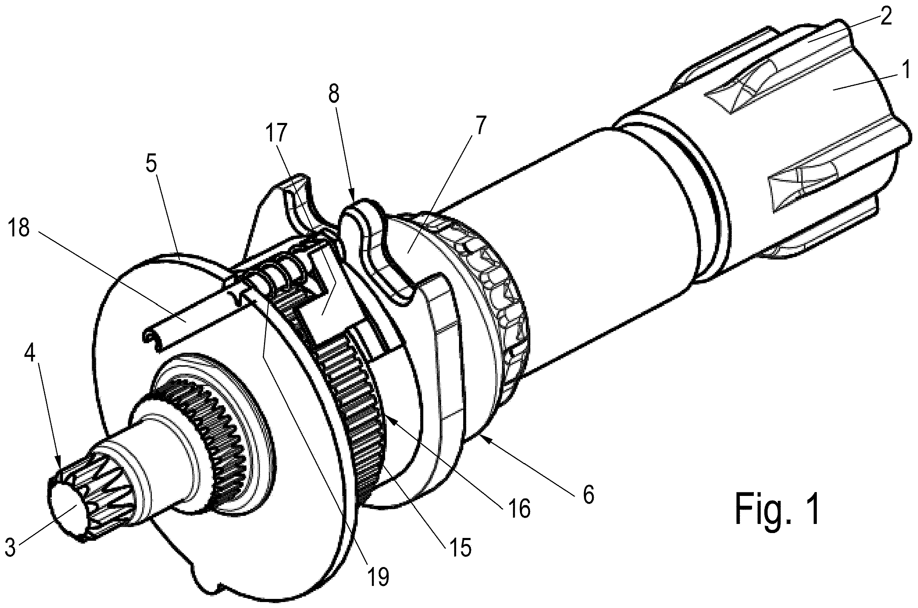

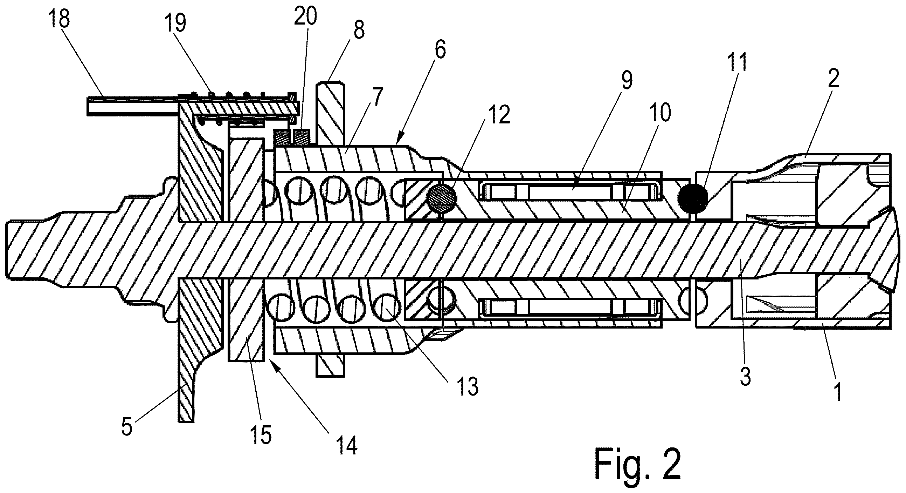

Die Fig. 1 und 2 zeigen eine beispielhafte Nachstellvorrichtung mit inkrementeller Nachstellfunktion, die zum zentrischen Einbau in einen Hohlraum einer Mutter-/Spindelkombination ausgelegt ist, wozu sie eine Abtriebseinrichtung aufweist, welche mit einer Abtriebskontur - hier mehrere von einer Abtriebsbuchse 1 radial nach außen vorkragenden Abtriebszähne 2 - versehen ist, welche dazu ausgelegt sind, in dem Hohlraum in der Spindel in eine korrespondierende Innenkontur, insbesondere eine Innenverzahnung der Spindel oder dgl. einzugreifen.

Derart wird bei Drehungen der Abtriebsbuchse 1 beispielsweise die Drehspindel relativ zu einer drehfest gehaltenen Mutter verdreht, was wiederum die Gesamtlänge der Mutter-/Spindelanordnung verändert.

Diese Ausgestaltung ist vorteilhaft, aber nicht zwingend. Es ist auch denkbar, die Nachstellvorrichtung seitlich neben einer Mutter-Spindelanordnung oder zwischen zwei Mutter-/Spindelanordnungen senkrecht zu diesen anzuordnen, wozu in erster Linie die Art des Abtriebselementes (z.B. ein Kegelrad, ein Zahnrad oder ein Kronenrad) entsprechend angepasst werden muss.

Die Nachstellvorrichtung weist ferner eine Abtriebswelle 3 auf, welche die Nachstellvorrichtung - hier über ihre gesamte axiale Länge - durchsetzt und welche drehfest mit der Abtriebsbuchse 1 verbunden ist.

An dem von der Abtriebskontur mit der Abtriebsbuchse 1 abgewandten Ende endet die Abtriebswelle 3 hier in einer Drehmomentübertragungskontur 4, an der sie zum Belagwechsel mit einem entsprechenden Werkzeug rückdrehbar ist.

Nahe zu diesem Ende durchsetzt die Abtriebswelle 3 ferner drehbar eine Flanschscheibe 5, welche zum axialen Abstützen an einer Kontur der Scheibenbremse, insbesondere des Bremssattels, dient. Die Flanschscheibe 5 ist dazu vorzugsweise unverdrehbar an dem Bremssattel abgestützt und dient als festes Widerlager der Nachstellvorrichtung an der Scheibenbremse.

An dem von der Drehmomentübertragungskontur 4 abgewandten Ende ist die Abtriebswelle 3 ferner drehfest mit einer Abtriebsbuchse 1 gekuppelt.

Die Nachstellvorrichtung weist ferner eine Antriebseinheit 6 - hier eine radial äußere Drehbuchse 7 mit einer radial von dieser nach außen vorkragenden Gabelkontur 8 auf, in welche im Betrieb wenigstens ein Ansatz eines verschwenkbaren Drehhebels (hier nicht dargestellt) eingreift. Bei einem Verschwenken des Drehhebels werden daher die Gabelkontur 8 und damit auch die Antriebs-Drehbuchse 7 beim Zuspannen der Scheibenbremse zunächst in eine erste Drehrichtung gedreht und sodann beim Lösen der Bremse infolge des Zurückschwenkens des Drehhebels in der entgegen gesetzten Drehrichtung zurück gedreht.

Zum Stand der Technik wird insoweit auch die EP 0 555 682 A1 und die WO 91/19115 verwiesen, welche beispielhaft die Kopplung zwischen dem Drehhebel und der Antriebsgabel und die Kopplung zwischen der Abtriebsbuchse und einer Drehspindel einer Mutter-/Spindelanordnung veranschaulichen (die Mutter ist in der WO 91/19115 als Traverse ausgebildet und es sind zwei drehfest gekoppelte Mutter-Spindelanordnungen vorgesehen, die über ein Synchronisationsgetriebe drehfest gekoppelt sind, wobei nur in einer dieser Anordnungen eine Nachstellvorrichtung bzw. ein Nachstellantrieb angeordnet ist).

Die drehbare Antriebs-Drehbuchse 7 ist - hier an ihrem Innenumfang - über ein Freilaufelement 9 zur Realisierung einer Freilauffunktion in Rückdrehrichtung mit einer drehbaren Koppelbuchse 10 gekoppelt. Die Koppelbuchse 10 wird von der Abtriebswelle 3 durchsetzt und ist auf dieser relativ zu dieser verdrehbar.

Derart dreht die Antriebsbuchse 3 beim Zuspannen der Scheibenbremse und bei dem damit verbundenen Verschwenken des Drehhebels im Krafthub und der Antriebsbuchse 7 die Koppelbuchse 10 in der ersten Drehrichtung mit. Beim Lösehub wird die Koppelbuchse 10 dagegen aufgrund des Freilaufs nicht zurück gedreht.

Die Koppelbuchse 10 ist an einem ihrer axialen Enden über ein Axiallager 11 - hier ein Axialwälzlager - an der Abtriebsbuchse 1 abgestützt und an ihrem entgegen gesetzten Ende ist sie über eine Überlastkupplung 12 an einem elastischen Element, insbesondere einer Schraubenfeder 13 abgestützt, die mit der Ausgangsseite der Überlastkupplung 12 drehfest gekoppelt ist.

Die Schraubenfeder 13 umgibt konzentrisch die Abtriebswelle 3 und ist an ihrem von der Überlastkupplung 12 abgewandten Ende drehfest an einer Axialseite 14 eines Hemmrades 15 abgestützt. Dieses Hemmrad 15 ist wiederum drehfest mit der die Nachstellvorrichtung über ihre gesamte axiale Länge durchsetzenden Abtriebswelle 3 gekoppelt.

Bei einem Zuspannen der Scheibenbremse wird daher über den Drehhebel die Antriebseinheit 6 gedreht, wobei die Überlastkupplung 12 - hier eine Kugelrampenkupplung - gedreht wird, wodurch das elastische Element, hier die Schraubenfeder 13, gespannt wird.

Die Überlastkupplung 12 begrenzt das Drehmoment, welches im elastischen Element - hier der Schraubenfeder 13 - gespeichert werden kann. Die Überlastkupplung 12 wird hier in bevorzugter - aber nicht zwingender - Ausgestaltung durch eine Kugelrampenkupplung realisiert.

Am zweiten Ende des elastischen Elements 13 befindet sich das Hemmrad 15, welches fest mit der Abtriebswelle 3 verbunden ist. Das Hemmrad 15 weist eine inkrementelle Außenkonturierung, beispielsweise eine Außenverzahnung 16 auf, wobei die Zähne dieser Außenverzahnung um den Mindestnachstellhub in Umfangsrichtung voneinander beabstandet sind. Das Hemmrad ist von einem Hemmstück 17 fixierbar, welches hier als Schwenkklinke ausgebildet ist, die schwenkbar an einem Stift 18 gelagert ist, der an seinem einen Ende an der Flanschscheibe 5 befestigt ist.

Vorzugsweise wird das Hemmstück 17 von einer Feder 19 axial positioniert. Das Hemmstück 17 kann axial verschoben werden um beim Belagwechsel den Nachsteller zurückdrehen zu können. Das Hemmstück hat keine Lösestellung sondern sperrt in beiden Stellungen. Freigegeben wird beim Wechsel von der ersten in die zweite Stellung oder umgekehrt. Die zwei Nockenkonturen bestimmen und sichern die Stellung des Hemmstücks 17. Ab einer bestimmten Position wird ein Flankenwechsel der Hemmung vollzogen. Dadurch kommt es zu einem halben Zustell-Schritt in Vorwärts- und einem halben Schritt in Rückwärtsrichtung.

Das Hemmstück 17 erstreckt sich axial nicht nur über die Länge des Hemmrades 15 sondern bis in den Bereich der Antriebsbuchse 7 hinein. Insgesamt wird derart eine Art Ratschen-/Klinkenmechanismus realisiert.

Die Antriebsbuchse 7 ist in diesem Bereich an ihrem Außenumfang mit einer Steuernocke 20 versehen, die so ausgebildet ist, dass das Hemmstück 17 bei einer genügenden Drehung der Antriebsbuchse 7 aus der Außenverzahnung 16 gelöst wird, so dass sich das Hemmrad 15 aus der durch das Hemmstück 17 bewirkten Verriegelung löst, wodurch das in der Feder gespeicherte Drehmoment bei einem vorhandenen zu großen Lüftspiel eine inkrementelle Drehung des Hemmrades 15 und damit der Abtriebswelle 3 und der Abtriebsbuchse um den Zahnabstand der Verzahnung 16 bewirken kann. Hierdurch wird eine inkrementelle Nachstellbewegung bewirkt. Das Hemmstück 17 realisiert derart die im Anspruch 1 erwähnte, in eine Inkrementwechselposition bewegliche Verrieglungseinrichtung zur Verhinderung von Drehungen von einem der oder sämtlicher der Getriebeelemente zwischen dem elastischen Element und der Abtriebseinrichtung unterhalb eines Mindestdrehwinkels in konstruktiv einfacher und sicher arbeitender Ausgestaltung. Das elastische Element 13 wird nur im Vorhub verspannt, wobei der Freilauf der Überlastkupplung 12 verhindert, dass das elastische Element 13 im Rückhub in Rückdrehrichtung verspannt wird.

In Abhängigkeit vom Betätigungshub lässt das Hemmstück 17 derart das Hemmrad 15 in definierten Schritten weiterdrehen.

Da die Steuernocke 20 das Hemmstück 17 ein oder mehrere Male im Vorhub und ein oder mehrere Male im Rückhub überfährt, werden die Hälfte des Nachstellwegs im Vorhub und die Hälfte im Rückhub realisiert, wenn die Bewegung so groß ist, dass das Hemmstück 17 sich aus der Außenverzahnung lösen kann. Jede durch die Steuernocke bewirkte Stellungsänderung des Hemmstücks 17 bewirkt ein Vordrehen des Hemmstücks 17 um einen halben Zahnabstand.

Ein Vorteil des Ausführungsbeispiels liegt darin, dass die Abtriebswelle 3 durch das Hemmrad 15 und das Hemmstück 17 formschlüssig fixiert ist. Somit ist der Nachsteller gegenüber Schwingungen unempfindlicher als eine Lösung mit kraftschlüssiger Fixierung, denn nur dann, wenn eine Drehbewegung groß genug ist, wird das Hemmstück 17 aus der Außenverzahnung 16 des Hemmrades 15 gelöst.

Ein weiterer Vorteil des Ausführungsbeispiels liegt darin, dass das konstruktive Lüftspiel direkt über die Kontur und nicht über Spalte zwischen Bauteilen bestimmt wird. Das tatsächlich eingestellte Lüftspiel ist somit bezüglich Bauteil- und Positionstoleranzen weniger empfindlich als nach dem Stand der Technik.

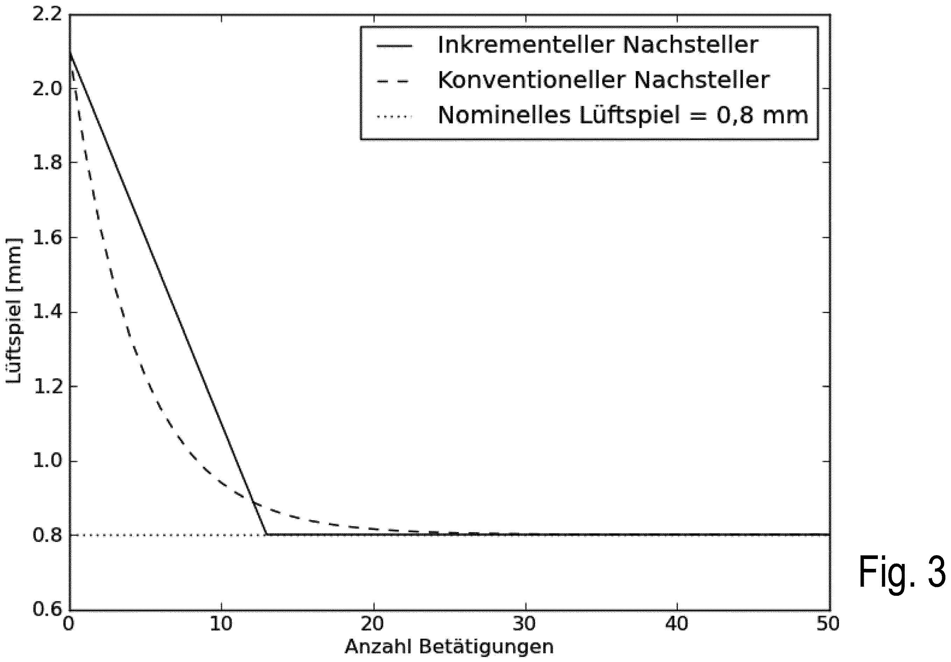

Das Verhalten der Nachstellvorrichtung im Betrieb veranschaulicht Fig. 3. In Fig. 3 ist das Nachstellverhalten eines solchen Nachstellers im Vergleich zu einem konventionellen Nachsteller dargestellt. Dabei wird von einem Startlüftspiel von 2,1 mm, einem Nachstellinkrement von 0,1 mm (Zahnabstand der Ratschen-/Klinkenanordnung) und einer Nachstellschwelle von 0,09 mm ausgegangen. Die Nachstellvorrichtung 1 stellt das Lüftspiel im Betrieb schnell und sicher auf das vorgesehene nominelle Lüftspiel von hier beispielhaft 0,8 mm ein.

**Bezugszeichen**

| | |
|---|---|
| Abtriebselement | 1 |
| Abtriebszähne | 2 |
| Abtriebswelle | 3 |
| Drehmomentübertragungskontur | 4 |
| Flanschscheibe | 5 |
| Antriebseinheit | 6 |
| Drehbuchse | 7 |
| Gabelkontur | 8 |
| Freilaufelement | 9 |
| Koppelbuchse | 10 |
| Axiallager | 11 |
| Überlastkupplung | 12 |
| Feder | 13 |
| Axialseite | 14 |
| Hemmrad | 15 |
| Außenverzahnung | 16 |
| Hemmstück | 17 |
| Stift | 18 |
| Rückstellfeder | 19 |
| Steuernocke | 20 |

## Patentansprüche

1. Nachstellvorrichtung für eine Scheibenbremse, insbesondere für eine pneumatisch betätigte Scheibenbremse, mit
a) einer drehbaren Antriebseinheit (6),
b) einer Abtriebseinrichtung (1, 2),
c) weiteren zwischen die Antriebseinheit (6) und die Abtriebseinrichtung (1, 2) geschaltete Getriebeelementen, welche ein Freilaufelement (9) und eine Überlastkupplung (12) umfassen,
d) wobei die Getriebeelemente ferner wenigstens ein elastisches Element (13) umfassen, welches zur Speicherung von Energie infolge von Drehungen der Antriebseinheit (6) und zur Drehung der Abtriebseinrichtung (1, 2) direkt oder über eines oder mehrere weitere der Getriebeelemente ausgelegt ist,
e) wobei eine vorzugsweise formschlüssig wirkende, bewegliche Verriegelungsvorrichtung zur Verhinderung von Drehungen von einem der oder sämtlicher der Getriebeelemente (1, 2, 3, 15) zwischen dem elastischen Element (13) und der Abtriebseinrichtung (1, 2) unterhalb eines Mindestdrehwinkels vorgesehen ist,
f) wobei die Antriebseinheit (6) eine radial äußere Drehbuchse (7) mit einer radial von dieser nach außen vorkragenden Drehmoment-Übertragungskontur aufweist,
**dadurch gekennzeichnet, dass**
g) die Drehbuchse (7) mit einer Betätigungsnocke (20) versehen ist.

2. Nachstellvorrichtung nach Anspruch 1, **dadurch gekennzeichnet, dass** die Verriegelungsvorrichtung dazu ausgelegt ist, bei einem Überschreiten eines vorgegebenen Mindestdrehwinkels in eine Inkrementwechselposition bewegt zu werden, um eine inkrementelle Nachstelldrehung des oder der Getriebeelemente(s) zwischen dem elastischen Element und dem Abtriebselement (2) zuzulassen.

3. Nachstellvorrichtung nach Anspruch 1 oder 2, **dadurch gekennzeichnet, dass** die Verriegelungsvorrichtung einen formschlüssig wirkenden Ratschen-/Klinkenmechanismus (15, 16) aufweist.

4. Nachstellvorrichtung nach Anspruch 3, **dadurch gekennzeichnet, dass** die Verriegelungsvorrichtung einen formschlüssig wirkenden Ratschen-/Klinkenmechanismus (15, 16) mit einem Hemmrad (15) und einem Hemmstück (17) aufweist.

5. Nachstellvorrichtung nach einem der vorstehenden Ansprüche, **dadurch gekennzeichnet, dass** eine Abtriebswelle (3) eine Flanschscheibe (5) durchsetzt, welche zum axialen Abstützen an einer Kontur der Scheibenbremse dient.

6. Nachstellvorrichtung nach Anspruch 5, **dadurch gekennzeichnet, dass** die Flanschscheibe (5) zum axialen Abstützen an einer Kontur des Bremssattels der Scheibenbremse dient.

7. Nachstellvorrichtung nach Anspruch 5 oder 6, **dadurch gekennzeichnet, dass** die Abtriebswelle (3) drehfest mit dem Abtriebselement (1) gekoppelt ist.

8. Nachstellvorrichtung nach einem der Ansprüche 5 bis 7, **dadurch gekennzeichnet, dass** die drehbare Antriebs-Drehbuchse (7) über das Freilaufelement (9) mit einer drehbaren Koppelbuchse (10) gekoppelt ist, welche von der Abtriebswelle (3) durchsetzt ist und auf dieser relativ verdrehbar angeordnet ist.

9. Nachstellvorrichtung nach Anspruch 8, **dadurch gekennzeichnet, dass** die Koppelbuchse (10) über eine Überlastkupplung (12) an dem elastischen Element (13) abgestützt ist.

10. Nachstellvorrichtung nach einem der Ansprüche 5 bis 9, **dadurch gekennzeichnet, dass** das elastische Element (13) ferner an einem Hemmrad (15) drehfest abgestützt ist, das wiederum drehfest mit der Abtriebswelle (3) gekoppelt ist.

11. Nachstellvorrichtung nach Anspruch 10, **dadurch gekennzeichnet, dass** das Hemmrad (15) eine Außenkonturierung aufweist und dass das Hemmrad (15) von einem beweglichen Hemmstück (17) fixierbar und freigebbar ist.

12. Nachstellvorrichtung nach Anspruch 11, **dadurch gekennzeichnet, dass** das Hemmrad (15) als Außenkonturierung eine Außenverzahnung (16) aufweist.

13. Nachstellvorrichtung nach Anspruch 11 oder 12, **dadurch gekennzeichnet, dass** das Hemmstück (17) als Schwenkklinke ausgebildet ist, die klinkenartig auf die Außenkonturierung des Hemmrades (15) einwirkt.

14. Nachstellvorrichtung nach Anspruch 12 oder 13, **dadurch gekennzeichnet, dass** die Antriebsbuchse (7) an ihrem Außenumfang mit der Steuernocke (20) versehen ist und dass diese derart ausgebildet ist, dass das Hemmstück (17) bei einer einen genügenden Winkel überstreichenden Drehung der Antriebsbuchse (7) aus der Außenverzahnung (16) gelöst wird, so dass sich das Hemmrad (15) aus der durch das Hemmstück (17) bewirkten Verriegelung löst, wodurch das in dem elastischen Element (13) als Schraubenfeder gespeicherte Drehmoment eine inkrementelle Drehung des Hemmrades (15) und damit der Abtriebswelle (3) und der Abtriebsbuchse (1) um den Zahnabstand der Verzahnung (16) bewirkt.

15. Nachstellvorrichtung nach Anspruch 14, **dadurch gekennzeichnet, dass** das elastische Element (13) nur im Vorhub von der Antriebseinheit (6) verspannbar ist, wobei das Freilaufelement (9) verhindert, dass das elastische Element (13) im Rückhub in Rückdrehrichtung verspannt wird.

16. Nachstellvorrichtung nach Anspruch 15, **dadurch gekennzeichnet, dass** die Verriegelungsvorrichtung im Vorhub und im Lösehub durch den Nocken (20) aus der Verriegelungsstellung zum Freigeben einer Nachstelldrehung lösbar ist.

17. Nachstellvorrichtung nach Anspruch 16, **dadurch gekennzeichnet, dass** das Hemmstück (17) im Vorhub und im Lösehub durch den Nocken (20) aus der Verriegelungsstellung zum Freigeben einer Nachstelldrehung lösbar ist.

18. Nachstellvorrichtung nach einem der vorstehenden Ansprüche, **dadurch gekennzeichnet, dass** die radial von der Drehbuchse (7) nach außen vorkragende Drehmoment-Übertragungskontur eine Gabelkontur (8) ist.

19. Nachstellvorrichtung nach einem der vorstehenden Ansprüche, **dadurch gekennzeichnet, dass** die Drehbuchse (7) an ihrem Außenumfang mit der Betätigungsnocke (20) versehen ist.

## Claims

1. Adjustment device for a disc brake, in particular for a pneumatically actuated disc brake, with
a) a rotatable drive unit (6),
b) an output device (1, 2),
c) gear elements connected between the drive unit (6) and the output device (1, 2) and comprising a freewheel element (9) and an overload clutch (12),
d) wherein the gear elements comprise at least one elastic element (13) designed to store energy from rotations of the drive unit (6) and to rotate the output device (1, 2) directly or via one or more of the gear elements,
e) wherein a preferably positive-acting movable locking device is provided for the prevention of rotation of one or all of the gear elements (1, 2, 3, 15) between the elastic element (13) and the output device (1, 2) below a minimum rotary angle,
f) wherein the drive unit (6) has a radially outer rotary sleeve (7) with a torque transmission contour projecting radially outwards therefrom,
**characterised in that**
g) the rotary sleeve (7) is provided with an actuating cam (20).

2. Adjustment device according to claim 1, **characterised in that** the locking device is designed to be moved into an incremental change position if a predetermined minimum rotary angle is exceeded, in order to allow an incremental adjustment rotation of the gear element(s) between the elastic element and the output device (2).

3. Adjustment device according to claim 1 or 2, **characterised in that** the locking device has a positive-acting ratchet/pawl mechanism.

4. Adjustment device according to claim 3, **characterised in that** the locking device has a positive-acting ratchet/pawl mechanism with a blocking wheel (15) and a blocking piece (17).

5. Adjustment device according to any of the preceding claims, **characterised in that** an output shaft (3) passes through a flanged disc (5) provided for axial support on a contour of the disc brake.

6. Adjustment device according to claim 5, **characterised in that** the flanged disc (5) is provided for axial support on a contour of the brake calliper of the disc brake.

7. Adjustment device according to claim 5 or 6, **characterised in that** the output shaft (3) is non-rotatably coupled to the output element (1).

8. Adjustment device according to any of claims 5 to 7, **characterised in that** the rotatable drive rotary sleeve (7) is coupled via the freewheel element (9) to a rotatable coupling sleeve (10), through which the output shaft (3) passes and which is located thereon in a relatively rotatable manner.

9. Adjustment device according to claim 8, **characterised in that** the coupling sleeve (10) is supported on the elastic element (13) via an overload clutch (12).

10. Adjustment device according to any of claims 5 to 9, **characterised in that** the elastic element (13) is furthermore non-rotatably supported on a blocking wheel (15), which is in turn non-rotatably coupled to the output shaft (3).

11. Adjustment device according to claim 10, **characterised in that** the blocking wheel (15) has an outer contouring, and **in that** the blocking wheel (15) can be fixed and released by a movable blocking piece (17).

12. Adjustment device according to claim 11, **characterised in that** the blocking wheel (15) has an external toothing (16) as outer contouring.

13. Adjustment device according to claim 11 or 12, **characterised in that** the blocking piece (17) is designed as a pivotable detent acting on the outer contouring of the blocking wheel (15) in the manner of a detent.

14. Adjustment device according to claim 12 or 13, **characterised in that** the drive sleeve (7) is provided with the control cam (20) at its outer circumference, and **in that** the latter is designed such that the blocking wheel (15) is released from the external toothing (16) if the rotation of the drive sleeve (7) covers an adequate angle, so that the blocking wheel (15) is released from the lock caused by the blocking piece (17), as a result of which the torque stored in the elastic element (13) represented by a coil spring causes an incremental rotation of the blocking wheel (15) and thus of the output shaft (3) and the output sleeve (1) by the tooth-to-tooth distance of the toothing 16.

15. Adjustment device according to claim 14, **characterised in that** the elastic element (13) can only be tensioned by the drive unit (6) in the forward stroke, wherein the freewheel element (9) prevents a tensioning of the elastic element (13) in the backward stroke in the reverse direction of rotation.

16. Adjustment device according to claim 15, **characterised in that** the locking device can be released by the cam (20) from the locking position in the forward stroke and in the releasing stroke in order to enable an adjustment rotation.

17. Adjustment device according to claim 16, **characterised in that** the blocking piece (17) can be released by the cam (20) from the locking position in the forward stroke and in the releasing stroke in order to enable an adjustment rotation.

18. Adjustment device according to any of the preceding claims, **characterised in that** the torque transmission contour projecting radially outwards from the rotary sleeve (7) is a forked contour (8).

19. Adjustment device according to any of the preceding claims, **characterised in that** the rotary sleeve (7) is provided with the actuating cam (20) at its outer circumference.

## Revendications

1. Système de rattrapage d'un frein à disque, notamment d'un frein à disque à actionnement pneumatique, comprenant
a) une unité (6) menante tournante,
b) un dispositif (1, 2) mené,
c) d'autres éléments de transmission montés entre l'unité (6) menante et le dispositif (1, 2) mené, qui comprennent un élément (9) de roue libre et un accouplement (12) de surcharge,
d) dans lequel les éléments de transmission comprennent, en outre, au moins un élément (13) élastique, qui est conçu pour accumuler de l'énergie en raison de rotations de l'unité (6) menante et pour faire tourner le dispositif (1, 2) mené directement ou par l'intermédiaire d'un ou plusieurs autres des éléments de transmission,
e) dans lequel il est prévu un système de verrouillage mobile, agissant de préférence à complémentarité de forme, pour empêcher des rotations de l'un ou de tous les éléments (1, 2, 3, 15) de transmission entre l'élément (13) élastique et le dispositif (1, 2) mené en dessous d'un angle de rotation minimum,
f) dans lequel l'unité (6) menante a un manchon (7) tournant extérieur radialement, ayant un contour de transmission de couple, en saillie'radialement de celui-ci vers l'extérieur, **caractérisé en ce que**
g) le manchon (7) tournant est pourvu d'un bossage (20) d'actionnement.

2. Système de rattrapage suivant la revendication 1, **caractérisé en ce que** le système de verrouillage est conçu pour, si un angle de rotation minimum donné à l'avance est dépassé, être mis dans une position de changement par incrément, afin d'autoriser une rotation de rattrapage incrémentielle du ou des éléments de transmission entre l'élément élastique et l'élément (2) mené.

3. Système de rattrapage suivant la revendication 1 ou 2, **caractérisé en ce que** le système de verrouillage a un mécanisme (15, 16) d'encliquetage à cliquet agissant par complémentarité de forme.

4. Système de rattrapage suivant la revendication 3, **caractérisé en ce que** le système de verrouillage a un mécanisme (15, 16) d'encliquetage à cliquet agissant par complémentarité de forme, ayant une roue (15) d'arrêt et une pièce (17) d'arrêt.

5. Système de rattrapage suivant l'une des revendications précédentes, **caractérisé en ce qu'**un arbre (3) mené traverse un disque (5) de flasque, qui sert à l'appui axial sur un contour du frein à disque.

6. Système de rattrapage suivant la revendication 5, **caractérisé en ce que** le disque (5) de flasque sert à l'appui axial sur un contour de l'étrier du frein à disque.

7. Système de rattrapage suivant la revendication 5 ou 6, **caractérisé en ce que** l'arbre (3) mené est solidaire en rotation de l'élément (1) mené.

8. Système de rattrapage suivant l'une des revendications 5 à 7, **caractérisé en ce que** le manchon (7) tournant menant est accouplé par l'élément (9) de roue libre à un manchon (10) d'accouplement tournant, qui est traversé par l'arbre (3) mené et est monté tournant par rapport à celui-ci.

9. Système de rattrapage suivant la revendication 8, **caractérisé en ce que** le manchon (10) d'accouplement est appuyé sur l'élément (13) élastique par un accouplement (12) de surcharge.

10. Système de rattrapage suivant l'une des revendications 5 à 9, **caractérisé en ce que** l'élément (13) élastique est appuyé, en outre, en en étant solidaire en rotation, sur une roue (15) d'arrêt, laquelle à son tour est accouplée, en en étant solidaire en rotation, à l'arbre (3) mené.

11. Système de rattrapage suivant la revendication 10, **caractérisé en ce que** la roue (15) d'arrêt a un contour extérieur et **en ce que** la roue (15) d'arrêt peut être immobilisée et libérée d'une pièce (17) d'arrêt mobile.

12. Système de rattrapage suivant la revendication 11, **caractérisé en ce que** la roue (15) d'arrêt a, comme contour extérieur, une denture (16) extérieure.

13. Système de rattrapage suivant la revendication 11 ou 12, **caractérisé en ce que** la pièce (17) d'arrêt est constituée sous la forme d'un cliquet pivotant, qui agit à la manière d'un cliquet sur le contour extérieur de la roue (15) d'arrêt.

14. Système de rattrapage suivant la revendication 12 ou 13, **caractérisé en ce que** le manchon (7) menant est pourvu sur son pourtour extérieur du bossage (20) de commande et **en ce que** celui-ci est constitué de manière à ce que la pièce (17) d'arrêt, lors d'une rotation s'étendant sur un angle suffisant du manchon (7) menant, se détache de la denture (16) extérieure, de sorte que la roue (15) d'arrêt se détache du verrouillage provoqué par la pièce (17) d'arrêt, grâce à quoi le couple emmagasiné dans l'élément (13) élastique, sous la forme d'un ressort hélicoïdal, provoque une rotation incrémentielle de la roue (15) d'arrêt et ainsi de l'arbre (3) mené et du manchon (1) mené de la distance d'une dent de la denture (16).

15. Système de rattrapage suivant la revendication 14, **caractérisé en ce que** l'élément (13) élastique ne peut être bandé que dans la course d'avance par l'unité (6) menante, l'élément (9) de roue libre empêchant que l'élément (13) élastique soit bandé dans le sens de rotation en retour, lors de la course en retour.

16. Système de rattrapage suivant la revendication 15, **caractérisé en ce que** le système de verrouillage peut, dans la course d'avance et dans la course de détachement, être détaché par le bossage (20) de la position de verrouillage pour libérer une rotation de rattrapage.

17. Système de rattrapage suivant la revendication 16, **caractérisé en ce que** la pièce (17) d'arrêt peut, dans la course d'avance et dans la course de détachement, être détachée par le bossage (20) de la position de verrouillage pour libérer une rotation de rattrapage.

18. Système de rattrapage suivant l'une des revendications précédentes, **caractérisé en ce que** le contour de transmission de couple, en saillie radialement vers l'extérieur du manchon (7) tournant, est un contour (8) à fourche.

19. Système de rattrapage suivant l'une des revendications précédentes, **caractérisé en ce que** le manchon (7) tournant est pourvu, sur son pourtour extérieur, du bossage (20) d'actionnement.
